# EUROPÄISCHE PATENTANMELDUNG

(11) **EP 0 943 667 A1**
(43) Veröffentlichungstag der Anmeldung: **22.09.1999**
(21) Anmeldenummer: 99104450.4
(22) Anmeldetag: 05.03.1999
(51) Int. Cl.: C09D 17/00, C09D 7/02, C09D 5/02

(54) **Wässrige Dispersionen mit einer speziellen Dispergiermittelkombination**

(30) Priorität: 18.03.1998 DE 19811791
(71) Anmelder: Borchers GmbH, 40789 Monheim (DE); BAYER AG, 51368 Leverkusen (DE)
(72) Erfinder: Edelmann, Dirk Dr., 42277 Wuppertal (DE); Link, Günter, 38644 Goslar (DE); Mazanek, Jan Dr., 51061 Köln (DE)
(74) Vertreter: Steiling, Lothar, Dr.

(57) **Zusammenfassung**

Die Erfindung betrifft wäßrige Dispersionen und Pigmentpasten aus Füllstoffen und/oder Pigmeten, die eine spezielle synergistisch wirkende Dispergier- und Netzmittelkombination enthalten.

## Beschreibung

Die Erfindung betrifft wäßrige Dispersionen und Pigmentpasten aus Füllstoffen und/oder Pigmeten, die eine spezielle synergistisch wirkende Dispergier- und Netzmittelkombination enthalten.

Wäßrige Dispersionen von Füllstoffen und/oder Pigmenten, die z.B. als Pigmentpasten in Bautenfarben verwendet werden können besitzen im allgemeinen einen Feststoffgehalt im Bereich von 30-90 Gew.%. Die dabei eingesetzten Dispergiermittel sollen im wesentlichen der Dispersion bei dem gewünschten Feststoffgehalt geeignete rheologische Eigenschatten, sowie im Falle von Pigmentpasten gute Einarbeitbarkeit in entsprechende Lacke und Farben verleihen. Die Dispergiermittel bzw. Netzmittel sollen außerdem die Benetzung der zu dispergierenden bzw. zu benetzenden Stoffe verbessern, beim Dispergiervorgang die Desagglomeration erleichtern und die fertige Dispersion gegenüber Agglomeration, Sedimatation und Ausschwimmen stabilisieren.

Für diese Zwecke sind organische und anorganische Dispergierhilfsmittel bekannt. So werden z.B. als anorganische Dispergiermittel Phosphate, Polyphosphate oder Natriumhexametaphosphat eingesetzt.

Als organische Dispergiermittel werden z.B. Polymere und Copolymere der Methacryl- und Acrylsäure mit niedrigem bis mittleren Molekulargewicht eingesetzt. So beschreibt die DE-A 2 700 444 die Verwendung von Copolymeren mit Maleinsäurederivaten, die JP-A 57/095 396 die Verwendung von Copolymeren der Acrylsäure und der Styrolsulfonsäure, die JP-A 56/115630 die Verwendung von Copolymeren mit ungesättigten Sulfonsäuren und die DE-OS 3101939 die Verwendung phosphorhaltigen Polyacrylsäure-Copolymeren. Die Verwendung sulfonierter Polyesterharze wird in der SU-A 861 377 beschrieben und die von Derivaten von Styrol-Maleinsäureanhydrid-Copolymeren in der SU-A 903 438. Der Einsatz niedermolekularer nichtionischer Tenside ist in der BE-A 741 374 beschrieben.

Die Wirksamkeit der bekannten Dispergiermittel reicht aber in vielen Fällen nicht aus, um Pigmentpasten und/oder Dispersionen mit optimalen anwendungstechnischen Eigenschalten zu erhalten. Ist die Viskosität solcher Pigmentpasten und/oder Dispersionen zu hoch, so muß der Feststoffgehalt herabgesetzt werden, um technisch brauchbare Dispersionen, z.B. Streichfarben, zu erhalten. Dies führt aber zu einer Verschlechterung der Qualität dieser Farben, insbesondere bezüglich ihrer Farbstärke, Deckkraft und/oder Filmbildung.

Im Falle von Pigmentpasten führt eine nicht optimale Dispergierung zur Verschlechterung, vor allem bezüglich der Stabilität der Pasten und der daraus hergestellten Farben und Lacke. Auch die Farbtiefe der hergestellten Beschichtungen ist nicht optimal.

Es ist daher Ziel und Aufgabe der vorliegenden Erfindung, neue Dispergier- und Netzmittel zur Herstellung von Pigment- bzw. Füllstoffpasten mit verbesserten Eigenschalten zur Verlügung zu stellen.

Gegenstand der Erfindung sind wäßrige Dispersionen von Füllstoffen bzw. Pigmenten aus
A) 50 - 90 Gew.% eines nicht-ionischen Alkylenoxidadduktes mit einem mittleren Molekulargewicht von 2000 bis 100.000 Dalton,
B) 0 bis 40 Gew.% eines Salzes von Polycarboxylverbindungen,
C) 5 bis 60 Gew.% eines Salzes eines oder mehrerer saurer (Poly)-Phosphorsäureester und
D) 0 bis 60 Gew.% eines wasserlöslichen bzw. wasserdispergierbaren Polyurethanoligomers.
wobei die Summe der Komponenten A) + B) + C) +D) = 100 Gew.% ergibt und der Anteil mindestens einer der Komponenten B) oder D) von Null verschieden ist.

Die Komponente A) liegt zu 50 bis 90, insbesondere 60 bis 80 Gew.% vor.

Die Komponente B) liegt vorzugsweise zu 10 bis 40, insbesondere 10 bis 30 Gew.% vor.

Die Komponenten C) und D) liegen vorzugsweise unabhängig voneinander vor zu jeweils 0 bis 40, insbesondere 20 bis 40 Gew.% vor.

Als nicht-ionische Alkylenoxidaddukte A) kommen mono-, di- und polyfunktionelle Spezies in Frage. Beispielsweise kann es sich um Umsetzungsprodukte von Alkylenoxiden mit beliebigen, aktiven Wasserstoff enthaltenden Verbindungen handeln. Die Alkylenoxide können beispielsweise 2 bis 20, vorzugsweise 2 oder 3 C-Atome enthalten. Die aktiven Wasserstoff enthaltenden Verbindungen können beispielsweise mono-, di- oder polyfunktionelle, gegebenenfalls substituierte Phenole, Alkohole, Thioalkohole oder Amine sein. Umsetzungsprodukte von Alkylenoxiden mit α,ω-Aminopolyethem sind ebenfalls geeignet, beispielsweise solche mit mittleren Molekulargewichten von 200 bis 100.000 Dalton, bevorzugt von 500 bis 60.000 Dalton.

Eine besonders bevorzugte Gruppe von Verbindungen, die als Komponente A) geeignet sind, entsprechen der Formel (I) 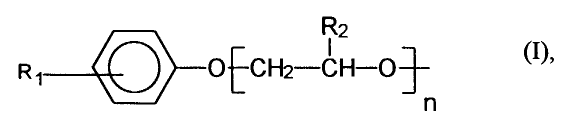 in welcher
- R₁: einen, aliphatischen, aromatischen oder araliphatischen Rest mit 1 bis 40 Kohlenstoffatomen,
- R₂: Wasserstoff, Phenyl oder einen Alkylrest mit 1 bis 12 C-Atomen und
- n: eine Zahl von 1 bis 200, bevorzugt 4 bis 100, besonders bevorzugt 6 bis 30 bedeutet.

Geeignete Komponenten A) werden in der DE-A 38 15 299 beschrieben.

Als Komponente B) kommen beispielsweise Homo- und Copolymere von Methacryl- und/oder Acrylsäure und deren Salze, insbesondere solche mit Molekulargwichten im Bereich von 800 bis 40.000, speziell 1000 bis 20.000 Dalton, in Form der Natrium, Kalium oder beliebige Ammoniumsalze in Frage. Geeignet sind auch andere Carboxylgruppen enthaltende Otigomere wie Salze der Polyasparaginsäure oder deren Copolymerisate. Besonders geeignet sind niedermolekulare Carboxylate wie z.B. Salze von Phosphonobutantricarbonsäuren oder Iminobernsteinsäuren.

Als Komponente C) eignen sich an sich bekannte Salze von Phosphor- und Polyphosphorsäuren. Bevorzugt werden dabei Salze von Di- und Monoalkylphosphaten mit organischen Aminen wie Dimethylethanolamin, Methyldiethanolamin, Triethanolamin oder Dimethylaminocyclohexan.

Als Komponente D) eignen sich bekannte wasserlösliche oder wasserdispergierbare Oligourethane. Zusätzlich zu dieser Ausführung, bei der ein Polyisocyanat mit hydrophilen Polyethern und einer tert. Aminoverbindung umgesetzt wird, eignen sich auch analoge Verbindungen, die ohne den Einsatz von tert. Aminoverbindungen hergestellt wurden.

Die Komponente D) führt insbesondere dann zu einer Verbesserung der erfindungsgemäßen Dispersionen, wenn sie aus schwer dispergierbaren Pigmenten oder Füllstoffen wie z.B. Ruß, Chinachridon oder Phthalocyanine hergestellt werden.

Erfindungsgemäße wäßrige Dispersionen können beispielsweise die Dispergiermittelkombination in Mengen von 0,02 bis 200 Gew.% (bezogen auf die in der Dispersion vorhandenen Feststoffe) enthalten. Vorzugsweise liegt diese Menge im Bereich von 0,05 bis 100 Gew.%, besonders bevorzugt im Bereich von 0,5 bis 80 Gew.%.

Die mit den erfindungsgemäßen Dispergiermittelkombinationen hergestellten Dispersionen bzw. Pigment- oder Füllstoffpasten zeichnen sich durch verbesserte Fließeigenschaften aus, insbesondere im Vergleich zu Dispersionen, die nur ein einziges Dispergiermittel enthalten. Dies bedeutet: Die erfindungsgemäße Additivkombination zeigt einen überraschenden synergistischen Effekt.

Die Auswahl der Komponenten C) und D) kann nach an sich bekannten Verfahren erfolgen, z.B. aufgrund von Viskositätsmessungen an Dispersionen oder Pigmentpasten. Besonders bevorzugt sind Kombinationen der Komponenten A) + B) + C) und/oder D). Das Verhältnis der Komponenten A) bis D) untereinander kann bei verschiedenen Füllstoff und/oder Pigment-Zusammensetzungen variieren. Die Wirksamkeit erfindungsgemäßer Dispergiermittelkombinationen kann gegebenenfalls durch Variieren der Mengenverhältnisse der Einzelkomponenten untereinander optimiert werden, um so Dispersionen oder Pigmentpasten mit bestmöglichen Fließeigenschatten zu erhalten. Das jeweilige optimale Verhältnis der Komponenten kann in einfacher Weise durch Screeningversuche bestimmt werden.

Als Füllstoffe und Pigmente kommen beliebige organische und anorganische Feststoffe in Frage, so organische Pigmente, wie z.B. Phthalocyanine, Benzidine, Arylamidgelb, Nickelazogelb, Diarylidone, Isoindoline, Perylenrot, Thioindigorot, Chinacridonviolett, Ruß, anorganische Pigmente wie z.B. Titandioxid, Eisenoxide, Zinkoxide, Chromate, Molybdate, Cobaltspinelle oder Füllstoffe wie z.B. Silicate, Aluminiumtitanate, Siliciumnitrite, Bariumsulfat, Calciumsulfat usw. Ebenfalls in Frage kommen Metallpulver z.B. für die Herstellung von Keramiken.

Erfindungsgemäße Dispersionen können beispielsweise 5 bis 95 Gew.% Feststoffe enthalten. Vorzugsweise liegt der Feststoffgehalt zwischen 15 und 80 Gew.%, besonders bevorzugt zwischen 30 und 70 Gew.%.

Die Herstellung erfindungsgemäßer Dispersionen kann auf an sich bekannte Weise erfolgen. Beispielsweise kann man die nach Vortests ausgewählten Dispergiermittelkombinationen in Wasser oder in einem Gemisch aus Lösemitteln und Wasser lösen und dann die zu dispergierenden Stoffe unter Rühren zugeben. Man kann sich die Dispergiermittelkombination, Wasser und die Feststoffe auch in einer Mühle vermischen und gemeinsam veimahlen. Bevorzugt werden die Feststoffe zuerst mit der Dispergiermittelkomponente A) vordispergiert und danach die sonstigen Dispergiermittelkomponenten und gegebenenfalls weiteres Wasser zugegeben. So erhält man im allgemeinen Dispersionen mit besonders stark verbesserten Fließeigenschatten.

Der pH-Wert erfindungsgemäßer Dispersionen kann die Fleißeigenschaften beeinflussen. Gegebenenfalls kann der jeweils optimale pH-Wert durch einfache Optimierungsversuche ermittelt werden. Erliegt im allgemeinen im Bereich von 5 - 10.

Erfindungsgemäße Dispersionen können gegebenfalls weitere übliche Zusätze enthalten, z.B. Bindemittel, Verlaufsmittel, Farbstoffe und/oder Entschäumer.

Die Beurteilung der erfindungsgemäßen Dispersionen, insbesondere von deren Fließeigenschalten, kann z.B. durch Viskositätsmessungen erfolgen. Screening-tests werden vorteilhalterweise mit höher konzentrierten Dispersionen durchgeführt, als sie praktisch verwendet werden. Eine andere Möglichkeit, die erfindungsgemäßen Dispersionen zu beurteilen, liegt in der Beurteilung von Farbtiefen der Beschichtungen, die mit Hilfe erfindungsgemäßer Pigmentkonzentrate hergestellt werden.

### Beispiele

### 1) Herstellung von Pigmentpasten

Es wurden Pasten gemäß den in Tab. 1 angegebenen Rezepturen hergestellt.

| Ansatz-Nr.: | | 1 | 2 | 3 | 4 | 5 | 6 | 7 |
|---|---|---|---|---|---|---|---|---|
| Phthalocyaninblau RS®¹⁾ (Hoechst AG) | | 44,0 | 44,0 | 44,0 | 44,0 | 44,0 | 44,0 | 44,0 |
| Borchigen DFN®¹) | | 8,0 | 8,0 | | | | | |
| Emulgator WN®²⁾ | | | | 8,9 | 8,9 | 8,9 | 8,9 | 8,9 |
| Borchigen ND®³⁾ | | | 3,0 | | 3,0 | 3,0 | 3,0 | |
| Borchigen VP 9703®⁴⁾ | | | | | | | | 3,0 |
| Borchigen VP 9630®⁵⁾ | | | 2,0 | | 2,0 | | | |
| Borchigen VP 9631®⁶⁾ | | | | | | 2,0 | | 2,0 |
| Borchigen SN 95®⁷⁾ | | | | | | | 3,0 | |
| AMP 90®⁸⁾ | | 2,0 | 2,0 | 2,0 | 2,0 | 2,0 | 2,0 | 2,0 |
| Nopco 8034 E®⁹⁾ | | 0,2 | 0,2 | 0,2 | 0,2 | 0,2 | 0,2 | 0,2 |
| Propylenglykol | | 0,7 | 0,7 | 0,7 | 0,7 | 0,7 | 0,7 | 0,7 |
| Wasser | 45,1 | 40,1 | 45,1 | 39,2 | 39,2 | 38,2 | 40,1 | |

| | | | | | | | | |
|---|---|---|---|---|---|---|---|---|
| 1) Alkylenoxidaddukt entsprechend Komponente A der Fa. Borchers GmbH | | | | | | | | |
| 2) Alkylenoxidaddukt entsprechend Komponente A der Fa. Bayer AG (90%ig) | | | | | | | | |
| 3) Dimethylaminocyclohexansalz eines Phosphorsäureestergemisches entsprechend Komponente C der Fa. Borchers GmbH | | | | | | | | |
| 4) Dimethylaminocyclohexansalz eines Phosphorsäureesters entsprechend Komponente C der Fa. Borchers GmbH | | | | | | | | |
| 5) Iminodisuccinatsalz entsprechend Komponente B der Fa. Borchers GmbH | | | | | | | | |
| 6) Polyasparaginsäuresalz entsprechend Komponente B der Fa. Borchers GmbH | | | | | | | | |
| 7) Polyurethanoligomer entsprechend Komponente D der Fa. Borchers GmbH | | | | | | | | |
| 8) 2-Amino-2-methyl-1-propanol 90%ig in Wasser der Fa. Angus-Chemie GmbH | | | | | | | | |
| 9) Mineralölentscäumer der Fa. Henkel KGaA | | | | | | | | |

Die Pasten wurden derart gefertigt, daß alle Bestandteile zusammen eingewogen wurden und anschließend mit 2mm Glaskugeln 1h im Skandex dispergiert wurden.

Die Viskositäten der so erhaltenen Pasten wurden im Rotationsviskosimeter Haake VT 550 (23°C; 10,3 s-1) gemessen. Es wurden folgende Werte erhalten (Tab.2.):

| Ansatz-Nr.: | 1 | 2 | 3 | 4 | 5 | 6 | 7 |
|---|---|---|---|---|---|---|---|
| Viskosität [mPas]: | 4000 | 450 | 4500 | 800 | 550 | 800 | 500 |

Aus den Beispielen erkennt man, daß die mit den erfindungsgemäßen Gemischen aus den Komponenten A,B + C oder A,B + D hergestellten Pasten geringere Viskositäten besitzen als Pasten die nur die Komponente A besitzen.

### 2. Einarbeitung der Pasten in ein wasserverdünnbares Alkydharz

Die Pasten der Ansätze 1-7 wurden in ein wasserverdünnbares, oxidadtiv trocknendes Alkydharz (Resydrol AY 586 W der Hoechst AG) eingearbeitet, um die Qualität der Pigmentbenetzung und das Verhalten in einem Bindemittel beurteilen zu können.

Dazu wurde folgende Rezeptur benutzt:
- Resydrol AY 586 W®: 48,25 g (s.o.)
- Octa-Soligen Cobalt 7 aqua®: 0,40 g (Borchers GmbH)
- Borchinox M2®: 0,10 g (Methylethylketoxim der Borchers GmbH))
- Pigmentpaste 1-7: 1,25 g

Dabei wurden zuerst das Sikkativ und Borchinox M2 in das Bindemittel eingerührt und anschließend die Pigmentpasten per Hand eingerührt. Die Farbe wurde zur weiteren Homogenisieiung noch 5 min im Skandex geschert ohne Glaskugeln.

Die so erhaltenen Lacke wurden 100 µm naß aufgerakelt und nach 24h der Haze und der Glanz mit dem haze-gloss (Byk-Gardner) gemessen (Tab.3.):

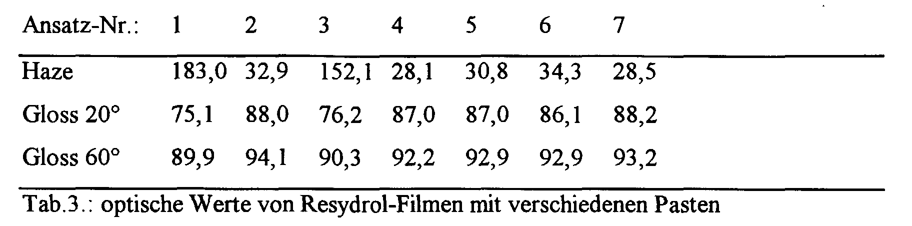

Aus den Werten der Tabelle 3 erkennt man, daß wiederum die Filme, die die erfindungsgemäßen Gemische enthalten, bessere optische Werte aufweisen, als solche die nur die Komponente A enthalten.

### 3. Prüfung der Pasten 1 - 7 in einer Dispersionsfarbe

Es wurde geprüft, wie sich die Pasten mit den erfindungsgemäßen Netzmittelkombinationen beim Abtönen einer weißen Innenfarbe verhalten. Dazu wurde eine weiße Dispersionsinnenfarbe (von Rhône-Poulenc*¹) mit den Pasten 1 - 7 abgetönt und diese Farbe dann auf eine Lenetta-Folie 200µm naß aufgerakelt. Beurteilt wurde die Farbtiefe der Farbe gegenüber einem Standart (Farbe mit Paste 1). Die Pigmentpasten 1-7 wurden dazu zunächst 1:10 in Wasser verdünnt. Von dieser Vorverdünnung wurden 1,5 g auf 98,5 g Farbe gegeben und dieser Ansatz 30 min im Skandex ohne Glaskugeln dispergiert.
¹ Die Rezeptur findet sich auf Seite 11 dieses Textes

Von den getrockneten Filmen wurde dann die Farbtiefe visuell bestimmt und von 1-6 benotet (Schulnoten). Es wurden folgende Ergebnisse gefunden (Tab.4.):

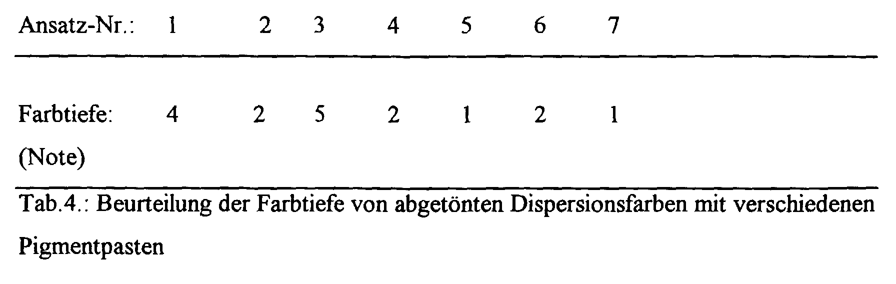

Es zeigt sich, daß diejenigen Farben mit den erfindungsgemäßen Dispergiermittelgemischen die besten Abtönergebnisse zeigen.

Rezeptur der verwendeten Dispersionsinnenfarbe:

### 1) Stammansatz:

- 409,0 g: Wasser
- 5,0 g: Calgon N® (10%ig) (Ladenburg BK; Polyphosphat)
- 2,0 g: Dispex N40® (Allied Colloids; Polyacrylat)
- 2,0 g: Preventol D7® (Borchers GmbH; Gebindemittelkonservierungsmittel)
- 2,0 g: Nopco 8034 E/D® (Henkel KGaA; Mineralölentschäumer)
- 1,0 g: NaOH (10%ig)
- 4,0 g: Natrosol 250 HBR® (Celluloseether; Aqualon B.V.)
- 220,0 g: Titandioxid RL 68® (Rhône-Poulenc)
- 50,0 g: Setacarb OG® (Kreide; Omya GmbH)
- 40,0 g: Omyacarb 5 GU® (Calcit; Omya GmbH)
- 70,0 g: Talkum IT 325® (Talk; Norwegian Talc)
- 50,0 g: Nainisch SE super® (Schwerspat; Luzenac)

Der Stammansatz wird ca. 10 min unter dem Dissolver bei 3000 U/min dispergiert. Die Paste wird 24 h stehengelassen und dann mit dem Bindemittel und dem Verdicker versetzt.

### 2) Lackansatz:

- 855,0 g: Stammansatz
- 140,0 g: Rhodapas DS 1029® (Styrol-Acrylat-Dispersion Rhône-Poulenc)
- 1,0 g: Nopco 8034 E/D® (s.o.)
- 5,7 g: Borchigel VP 9628® (PUR-Verdicker; Borchers GmbH)

Die Paste und die weiteren zugesetzten Bestandteile werden unter dem Korbrührer bei ca. 1000 U/min 5 - 7 min homogenisiert.

Die fertige Farbe wird 24 h stehengelassen und dann abgetönt.

## Patentansprüche

1. Wäßrige Dispersionen von Füllstoffen und/oder Pigmenten aus
A) 50 bis 90 Gew.% eines nicht-ionischen Alkylenoxidadduktes mit einem mittleren Molekulargewicht von 200 bis 100.000 Dalton,
B) 0 bis 40 Gew.% eines Salzes von Polycarboxylverbindungen,
C) 5 bis 60 Gew.% eines Salzes eines oder mehrerer saurer (Poly)Phosphorsäureester und
D) 0 bis 60 Gew.% eines wasserlöslichen oder wasserdispergierbaren Polyurethanoligomers,
wobei die Summe der Komponente A + B + C + D = 100 Gew.% ergibt und der Anteil mindestens einer der Komponenten B oder D von 0 verschieden ist.

2. Dispersionen nach Anspruch 1, dadurch gekennzeichnet, daß sie als Komponente A Umsetzungsprodukte von Alkylenoxiden mit 2 bis 20 C-Atomen mit mono-, di- oder polyfunktionellen, gegebenenfalls substituierten Phenolen, Alkoholen, Thioalkoholen oder Aminen enthalten.

3. Dispersionen nach Anspruch 1, dadurch gekennzeichnet, daß sie als Komponente A) eine Verbindung der Formel (I) 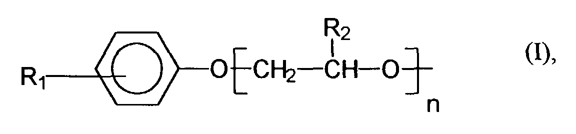 in welcher
R₁ einen aliphatischen, aromatischen oder araliphatischen Rest mit 1 bis 40 Kohlenstoffatomen,
R₂ Wasserstoff, Phenyl oder einen Alkylrest mit 1 bis 12 C-Atomen und
n eine Zahl von 1 bis 200 bedeutet,
enthalten.

4. Wäßrige Dispersionen gemäß Anspruch 1, dadurch gekennzeichnet, daß sie als Komponente B) Homo- und Copolymere von Asparaginsäure oder deren Salze mit Molgewichten von 200 bis 30.000 Dalton enthalten.

5. Wäßrige Dispersionen gemaß Anspruch 1, dadurch gekennzeichnet, daß sie als Komponente B) Iminodisuccinate enthalten.

6. Dispersionen und Pigmentpasten nach Anspruch 1, dadurch gekennzeichnet, daß sie als Komponente C) Salze von Mono- und/oder Dialkylphosphorsäureestern enthält.

7. Dispersionen und Pigmentpasten nach Anspruch 1, dadurch gekennzeichnet, daß sie organische Pigmente, wie z.B. Phthalocyanine, Benzidine, Arylamidgelb, Nickelazogelb, Diarylidone, Isoindoline, Perylenrot, Thioindigorot, Chinacridonviolett, Ruß, anorganische Pigmente wie z.B. Titandioxid, Eisenoxide, Zinkoxide, Chromate, Molybdate, Cobaltspinelle oder Füllstoffe wie z.B. Silicate, Aluminiumtitanate, Siliciumnitrite, Bariumsulfat, Calciumsulfat usw. enthalten. Ebenfalls können sie Metallpulver z.B. für die Herstellung von Keramiken enthalten.

8. Dispersionsfarben und Pigmentpasten, dadurch gekennzeichnet, daß sie eine Dispergiermittelkombination gemäß Anspruch 1 bis 7 in einer Menge von 0,02 bis 200 Gew.% (Feststoffanteil der Dispergiermittelkombinationen nach Anspruch 1 bis 7 bezogen auf den Feststoffanteil der Dispersion oder der Pigmentpaste) enthält.

9. Verwendung der erfindungsgemäßen Dispersionen zur Herstellung von Beschichtungen.

10. Verwendung von 0,02 bis 200 Gew.-% Dispersionen und Pigmentpasten nach Anspruch 1 zur Herstellung von Dispersionsfarben.
